# EUROPÄISCHE PATENTSCHRIFT

(11) **EP 1 788 276 B1**
(45) Veröffentlichungstag und Bekanntmachung des Hinweises auf die Patenterteilung: **08.06.2011**
(21) Anmeldenummer: 06021931.8
(22) Anmeldetag: 19.10.2006
(51) Int. Cl.: F16F 9/512

(54) **Schwingungsdämpfer mit amplitudenselektiver Dämpfungseinrichtung**
Shock absorber with a damping force depending on the amplitude
Amortisseur de vibrations avec une force d'amortissement dépendant de l'amplitude

(30) Priorität: 21.11.2005 DE 102005055801
(43) Veröffentlichungstag der Anmeldung: 23.05.2007
(73) Patentinhaber: ThyssenKrupp Bilstein Suspension GmbH, 58256 Ennepetal (DE)
(72) Erfinder: Götz, Ole, 38112 Braunschweig (DE); Saadeddin, Kais, 44866 Bochum (DE); Weimann, Claus, 58300 Wetter (DE); Brendecke, Thomas, 31228 Peine (DE)
(74) Vertreter: Adams, Steffen

(56) Entgegenhaltungen:
- DE-A1- 10 351 353
- DE-A1-102004 015 065
- US-A- 5 248 014
- US-A1- 2005 056 506

## Beschreibung

Die Erfindung betrifft einen Schwingungsdämpfer mit einer amplitudenselektiven Dämpfungseinrichtung gemäß dem Oberbegriff des Patentanspruchs 1.

Ein derartiger Schwingungsdämpfer ist aus US 5,248,014 bekannt. Nachteilig bei diesem bekannten Schwingungsdämpfer ist, dass die amplitudenselektive Dämpfungseinrichtung konstruktiv aufwändig gestaltet ist. So weist der Trennkolben eine ringförmige Umfangsnut und radial nach innen gerichtete Durchflusskanäle (shutter passages) auf, welche mit Durchflussbohrungen (guide passages) in der den den Trennkolben aufnehmenden Raum begrenzenden Gehäusewand zusammenwirken. Der Trennkolben ist bei dem bekannten Schwingungsdämpfer ferner in beide axiale Verschieberichtungen über Federn abgestützt, sodass er nicht frei verschiebbar innerhalb des ihn aufnehmenden Raumes angeordnet ist. Daher ist eine hydraulisch auf den Trennkolben einwirkende Mindestkraft erforderlich, die mindestens größer sein muss als die ihr entgegenwirkende Federkraft der den Trennkolben abstützenden Feder, um eine axiale Verschiebung des Trennkolbens zu erreichen. Wird eine axiale Verschiebung des Trennkolbens erreicht, so wirkt der Umfang des Trennkolbens mit der Durchflussbohrung zusammen, die in der den den Trennkolben aufnehmenden Raum begrenzenden Wandung vorgesehen ist. Der Bypassvolumenstrom wird dabei in zwei Teilvolumenströme aufgeteilt, sodass nicht der gesamte Bypassvolumenstrom für die axiale Verschiebung des Trennkolbens zur Verfügung steht. Somit kann bei Schwingungsanregungen mit geringen Amplituden der auf den Trennkolben einwirkende Druck so gering sein, dass er für eine axiale Verschiebung des Trennkolbens nicht ausreicht, sodass die Wirkung der amplitudenselektiven Dämpfungseinrichtung nicht eintritt. Bei allen Ausführungsformen einer amplitudenselektiven Dämpfungseinrichtung, in denen der Trennkolben durch Federn zentriert gehalten wird, ist die Position des Trennkolbens abhängig vom Differenzdruck am Trennkolben und nicht ausschließlich von der Menge des eingeströmten Dämpfungsmediums. In einem solchen Fall ist die amplitudenselektive Funktion des Dämpfungssystems geschwindigkeitsabhängig durch den Volumenstrom-Druck-Zusammenhang am Arbeitskolbenventil.

Der Erfindung liegt die Aufgabe zugrunde, einen Schwingungsdämpfer gemäß dem Oberbegriff des Patentanspruchs 1 dahingehend weiterzubilden, dass die amplitudenselektive Dämpfungseinrichtung konstruktiv einfach ausgebildet ist und ein feinfühliges Ansprechverhalten auch bei sehr geringen Amplituden aufweist.

Gemäß der Erfindung wird diese Aufgabe dadurch gelöst, dass der Trennkolben innerhalb des Raumes axial frei beweglich und die Kammern gegeneinander abdichtend angeordnet ist und dass der den Trennkolben aufnehmende Raum derart mit den Verbindungskanälen verbunden ist, dass der gesamte Bypassvolumenstrom in der Zugstufe und in der Druckstufe jeweils vollständig für die axiale Verschiebung des Trennkolbens innerhalb des Raumes eingesetzt wird.

Bei der Erfindung sind innerhalb des Bypass mindestens zwei Druckbegrenzungsventile angeordnet, von denen eines in der Zugstufe und eines in der Druckstufe des Schwingungsdämpfers wirksam ist. Dadurch wird ein eine Dämpfungskennung aufweisender Bypass erreicht, dessen Dämpfungskennung von der Auslegung der Druckbegrenzungsventile abhängig ist. Gleichzeitig ist innerhalb des Bypass auch ein Raum vorgesehen, der hydraulisch parallel zu dem Dämpfungskolben des Schwingungsdämpfers angeordnet ist und in dem ein in axialer Richtung bewegbarer Trennkolben angeordnet ist, der den Raum in eine kolbenstangenseitige und eine kolbenstangenferne Kammer unterteilt, wobei die kolbenstangenseitige Kammer mit dem kolbenstangenseitigen Arbeitsraum des Schwingungsdämpfers und die kolbenstangenferne Kammer mit dem kolbenstangenfernen Arbeitsraum des Schwingungsdämpfers hydraulisch verbunden ist. Auf diese Weise ist innerhalb des Bypass eine amplitudenselektive Dämpfungseinrichtung vorgesehen, die bei Schwingungsanregungen mit geringen Amplituden wirksam wird und diese Schwingungen dämpft.

Dadurch, dass sowohl eine amplitudenselektive Dämpfungseinrichtung als auch in Zug- und Druckstufe wirksame Druckbegrenzungsventile innerhalb des Bypass angeordnet sind, wird ein Bypass zur Verfügung gestellt, der in der Zugstufe und in der Druckstufe eine gezielt einstellbare Dämpfungskennung für Schwingungen mit geringen Amplituden aufweist. Dadurch ist eine komfortable Dämpferabstimmung möglich, ohne auf ausreichende Stabilisierungseigenschaften der Fahrzeugkarosserie bei geringen Dämpfungsgeschwindigkeiten verzichten zu müssen.

Erfindungsgemäß ist der den Trennkolben aufnehmende Raum derart mit den die Kammern des Raumes mit den Arbeitskammern des Schwingungsdämpfers verbindenden Verbindungskanälen verbunden, dass der gesamte Bypassvolumenstrom in der Zugstufe und in der Druckstufe jeweils vollständig für die axiale Verschiebung des Trennkolbens innerhalb des Raumes eingesetzt wird. Auf diese Weise steht der gesamte Bypassvolumenstrom für die axiale Verschiebung des Trennkolbens zur Verfügung und es wird ein besonders feinfühliges Ansprechverhalten der amplitudenselektiven Dämpfungseinrichtung erreicht. Dadurch, dass der gesamte Bypassvolumenstrom für die axiale Verschiebung des Trennkolbens innerhalb des Raumes zur Verfügung steht, wird der Trennkolben bereits bei Schwingungsanregungen mit sehr geringen Amplituden bzw. Drücken axial verschoben, wodurch ein besonders hoher Fahrkomfort erreicht wird.

Zusätzlich zu dem ersten und zweiten Druckbegrenzungsventil, die innerhalb des Bypass angeordnet sind, kann hydraulisch parallel zu den Druckbegrenzungsventilen eine hydraulische Drossel vorgesehen sein. Durch diese hydraulisch parallel zu den Druckbegrenzungsventilen angeordnete Drossel ist der Trennkolben von einem Teilvolumenstrom beaufschlagbar, ohne dass dieser Teilvolumenstrom durch eines der Druckbegrenzungsventile fließen muss. Durch eine derartige, hydraulisch parallel zu den Druckbegrenzungsventilen geschaltete Drossel wird das Ansprechverhalten der amplitudenselektiven Dämpfungseinrichtung weiter verbessert, denn es muss nicht zunächst der Öffnungsdruck des in der jeweiligen Dämpfungsrichtung wirksamen Druckbegrenzungsventils überwunden werden, bevor der Trennkolben mit dem Bypassvolumenstrom beaufschlagt wird. Ein besonders feinfühlig reagierendes amplitudenselektives Dämpfungssystem wird auf diese Weise bereitgestellt.

Die mindestens zwei Druckbegrenzungsventile, die im Bypass des Schwingungsdämpfers angeordnet sind, können jeweils unterschiedliche Öffnungsdrücke aufweisen. Auf diese Weise können in der Zugstufe und in der Druckstufe unterschiedliche Dämpfungskennungen innerhalb des Bypass eingestellt werden. In einer besonderen Ausführungsform der Erfindung weist das in der Druckstufe wirksame Druckbegrenzungsventil einen sehr geringen Öffnungsdruck auf, sodass es in der Druckstufe keine oder nur eine kaum spürbare Dämpfungswirkung entfaltet und in der Zugstufe als Rückschlagventil wirkt. Die Ausgestaltung hat den Vorteil, dass eine solche Bypassfunktion vorteilhaft mit stark unsymmetrischen Zug-Druck-Verhältnissen der Dämpfungskennlinien am Arbeitskolben zusammen wirkt. Dies gilt insbesondere für sehr weiche Druckstufenkennlinien.

Hinsichtlich der konstruktiven Ausgestaltung der Druckbegrenzungsventile bestehen zahlreiche unterschiedliche Möglichkeiten. Beispielsweise können die Druckbegrenzungsventile als federbelastete Sitzventile ausgebildet sein, alternativ können sie auch als federbelastete Scheibenventile ausgebildet sein. Auch sind jeweils unterschiedliche Bauformen der Druckbegrenzungsventile in der Zugstufe einerseits und in der Druckstufe andererseits möglich.

Der Trennkolben weist an seinen axialen Stirnflächen elastische Anschlagpuffer auf. Diese Anschlagpuffer können gezielt eingestellte Federungseigenschaften aufweisen, sodass der Trennkolben gemäß einer bestimmten Abfederung an die den den Trennkolben aufnehmenden Raum begrenzenden axialen Anschläge anläuft. Die in axialer Richtung wirksamen Anschläge können dabei als auf den jeweiligen axialen Stirnseiten des Trennkolbens angeordnete Anschlagpuffer ausgebildet sein, die z.B. aus Elastomere bestehen. Alternativ dazu kann auch nur ein einziger Anschlagpuffer vorgesehen sein, der eine Öffnung des Trennkolbens durchdringt und an beiden axialen Stirnseiten des Trennkolbens übersteht, sodass an beiden axialen Seiten ein Anschlagpuffer für den Trennkolben gebildet ist. Wenn der Trennkolben mit seinen Anschlagpuffern an dem jeweiligen Anschlag anliegt und somit seine axiale Endlage erreicht hat, ist der Bypass abgeschaltet, d.h. es fließt keine Dämpfungsflüssigkeit mehr durch den Bypass.

Die gesamte amplitudenselektive Dämpfungseinrichtung kann in ein mit der Kolbenstange verbundenes Gehäuse integriert sein.

Im Folgenden wird die Erfindung anhand einer ein Ausführungsbeispiel darstellenden Zeichnung näher erläutert. Im Einzelnen zeigen
- Fig. 1: einen erfindungsgemäßen Schwingungsdämpfer im axialen Halbschnitt nach einer ersten Ausführungsform;
- Fig. 2: einen erfindungsgemäßen Schwingungsdämpfer im axialen Halbschnitt nach einer zweiten Ausführungsform der Erfindung;
- Fig. 3: eine Bypassscheibe für die Zugstufe in einer ersten Ausführungsform (Omegascheibe);
- Fig. 4: eine Bypassscheibe für die Druckstufe gemäß einer zweiten Ausführungs-form;
- Fig. 5: ein Diagramm zur Erläuterung der Wirkung der erfindungsgemäßen amplitudenselektiven Dämpfungseinrichtung.

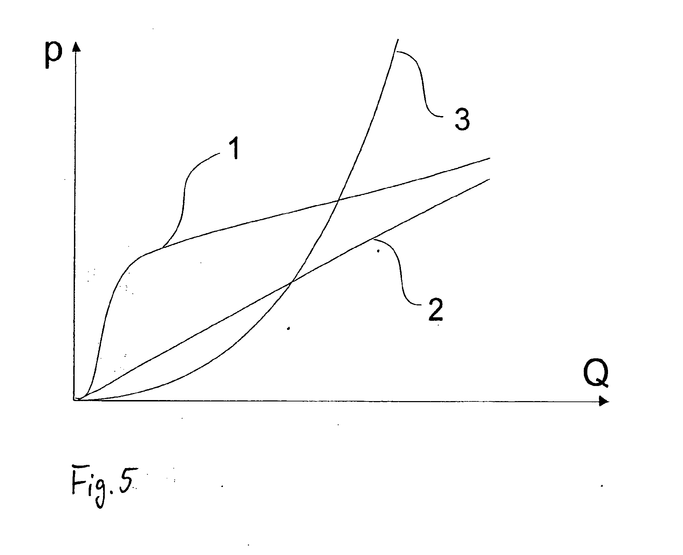

Zunächst wird anhand der Fig. 5 die Wirkungsweise der erfindungsgemäßen amplitudenselektiven Dämpfungseinrichtung erläutert. In Fig. 5 ist ein p-Q-Diagramm dargestellt, in welchem unterschiedliche Druck-Volumenstrom-Kennlinien dargestellt sind. Die mit der Ziffer 3 bezeichnete Kennlinie ist parabelförmig ausgebildet und gibt die Kennlinie einer einfachen hydraulischen Drossel an. Einen derartigen Kennlinienverlauf hätte der Bypass einer herkömmlichen amplitudenselektiven Dämpfungseinrichtung, die keine zusätzlichen Druckbegrenzungsventile aufweist. Im Vergleich dazu zeigt die mit der Ziffer 1 bezeichnete Kennlinie den typischen Kennlinienverlauf eines Druckbegrenzungsventils mit degressivem Dämpfungsverhalten. Die mit der Ziffer 2 bezeichnete Kennlinie ist als Sonderfall anzusehen und stellt die Kennlinie eines Druckbegrenzungsventils mit linearer Dämpfungskennung dar.

In dem in Fig. 5 dargestellten Diagramm wird deutlich, dass eine amplitudenselektive Dämpfungseinrichtung, die hydraulisch parallel zum Arbeitskolben des Schwingungsdämpfers angeordnet ist und lediglich eine einfache hydraulische Drossel beinhaltet, aufgrund des parabelförmigen Kennlinienverlaufes der hydraulischen Drossel bei geringen Volumenströmen nur minimale, bei hohen Volumenströmen dagegen hohe und stark progressiv ansteigende Dämpfungskräfte erzeugt, worunter der Fahrkomfort leidet. Demgegenüber weisen die Kennlinien 1 und 2 auch bei vergleichsweise hohen Volumenströmen der Dämpfungsflüssigkeit deutlich geringere Drücke bzw. Dämpfkräfte auf. Dies wird im Rahmen der Erfindung dadurch ausgenutzt, dass innerhalb des Bypass, der eine amplitudenselektive Dämpfungseinrichtung umfasst, zusätzlich Druckbegrenzungsventile z.B. mit Kennlinienverläufen gemäß den Kurven 1 und 2 des Diagramms gemäß Fig. 5 angeordnet werden. Auf diese Weise werden durch die Parallelschaltung des so ausgerüsteten Bypass mit dem Dämpfungsventil am Arbeitskolben des Schwingungsdämpfers gegenüber einem Bypass mit konstanter Drossel verbesserte Eigenschaften des amplitudenselektiven Schwingungsdämpfers erreicht.

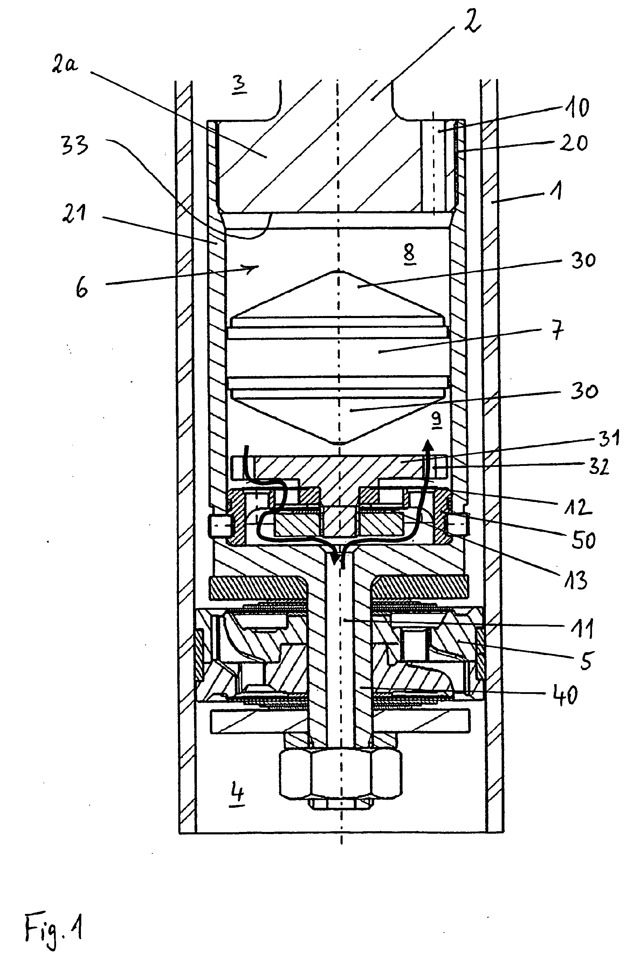

In Fig. 1 ist eine erste Ausführungsform des erfindungsgemäßen Schwingungsdämpfers im axialen Halbschnitt schematisch dargestellt. Die in unterschiedlichen Richtungen verlaufenden Pfeile deuten unterschiedliche Durchflussrichtungen der innerhalb des Bypass vorgesehenen Druckbegrenzungsventile 12, 13 an. In der rechten Bildhälfte der Fig. 1 ist die Durchflussrichtung für die Druckstufe dargestellt, während in dem in Fig. 1 linken Bildteil die Durchflussrichtung für die Zugstufe dargestellt ist.

Innerhalb des Dämpferrohres 1 ist ein Dämpfungskolben 5 oszillierend bewegbar geführt. Dieser Dämpfungskolben 5 unterteilt den Innenraum des Dämpferrohres 1 in einen kolbenstangenseitigen Arbeitsraum 3 und einen kolbenstangenfernen Arbeitsraum 4. An die Kolbenstange 2 ist über ein Gewinde 20 ein Gehäuse angebunden, welches eine Gehäusewand 21 aufweist. Innerhalb des Gehäuses ist ein Trennkolben 7 angeordnet, welcher den von der Gehäusewand 21 umschlossenen Raum 6 in eine kolbenstangenseitige Kammer 8 und eine kolbenstangenferne Kammer 9 unterteilt. Der Trennkolben 7 ist innerhalb des Raumes 6 in axialer Richtung frei beweglich angeordnet, d.h. es sind keine Federelemente oder dergleichen vorhanden, die den Trennkolben 7 in einer festen axialen Ruheposition halten, wenn dieser nicht durch einen Bypassvolumenstrom beaufschlagt wird.

An den axialen Stirnseiten des Trennkolbens 7 sind Anschlagpuffer 30 angeordnet, die aus elastischem Material, wie z.B. Gummi oder Elastomermaterial, bestehen. Mit diesen Anschlagpuffern 30 schlägt der Trennkolben 7 in axialer Richtung abfedernd und damit weich an die jeweiligen Anschlagflächen, die den Raum 6 in axialer Richtung begrenzen, an. Kolbenstangenseitig wird eine Anschlagfläche durch eine plane Stirnfläche 33 der Kolbenstange gebildet, während die Anschlagfläche auf der der Kolbenstange 2 abgewandten Seite innerhalb der Kammer 9 durch eine Anschlagscheibe 31 gebildet ist, die Bohrungen 32 für den Durchfluss der Dämpfungsflüssigkeit aufweist.

In der Darstellung gemäß Fig. 1 ist unterhalb der den Raum 6 und den Trennkolben 7 aufweisenden amplitudenselektiven Dämpfungseinrichtung ein Zapfen 40 vorgesehen, auf dem in an sich bekannter Weise der Hauptdämpfungskolben des Schwingungsdämpfers angeordnet ist. Der Zapfen 40 ist Teil des Bypass und weist eine zentrale Bohrung auf, welche einen hydraulischen Verbindungskanal 11 bildet, über den der kolbenstangenferne Arbeitsraum 4 mit der kolbenstangenfernen Kammer 9 des Raumes 6 verbunden ist. In vergleichbarer Weise ist der kolbenstangenseitige Arbeitsraum 3 über eine Zulaufbohrung, die in einem radialen Absatz 2a der Kolbenstange 2 angeordnet ist, mit der kolbenstangenseitigen Kammer 8 des Raumes 6 verbunden. Diese Zulaufbohrung bildet somit den hydraulischen Verbindungskanal 10 zwischen dem kolbenstangenseitigen Arbeitsraum 3 und der kolbenstangenseitigen Kammer 8 und weist einen so großen Durchmesser auf, dass ihre Drosselwirkung vernachlässigbar ist.

An dem der Kolbenstange 2 abgewandten Ende der Kammer 9 ist innerhalb des Bypass ein Ventilelement angeordnet, welches mindestens zwei Druckbegrenzungsventile 12, 13 aufweist. Das Ventilelement umfasst einen Ventilträger 50 und auf diesem angeordnete Ventilscheiben. In Fig. 1 ist das eine Druckbegrenzungsventil 12 in der Druckstufe des Schwingungsdämpfers wirksam, während das andere Druckbegrenzungsventil 13 in der Zugstufe des Schwingungsdämpfers wirksam ist.

Im Folgenden wird die Wirkungsweise der erfingungsgemäßen amplitudenselektiven Dämpfungseinrichtung anhand der Dämpfung in der Druckstufe und in der Zugstufe beschrieben:

Im rechten Bildteil von Fig. 1 ist durch den die Strömung des Dämpfungsmediums andeutenden Pfeil die Durchströmung dargestellt, die sich in der Druckstufe des Schwingungsdämpfers einstellt, d.h. also dann, wenn sich der Dämpfungskolben 5 in Fig. 1 nach unten bewegen würde. In diesem Fall fließt Dämpfungsflüssigkeit ausgehend vom kolbenstangenfernen Arbeitsraum 4 durch den innerhalb des Zapfens 40 vorgesehenen Verbindungskanal 11 in Richtung der Kammer 9. Auf seinem Strömungsweg trifft das Dämpfungsmedium dabei auf das Druckbegrenzungsventil 12, sodass eine Dämpfungswirkung durch dieses Druckbegrenzungsventil 12 erreicht wird. Nachdem die Dämpfungsflüssigkeit das Druckbegrenzungsventil 12 durchlaufen hat, tritt es durch in einer Anschlagscheibe 31 angeordnete Bohrungen 32 in die Kammer 9 des Raumes 6 ein, in dem der Trennkolben 7 axial verschiebbar geführt ist. Der gesamte Bypassvolumenstrom der Druckstufe trifft dabei auf die der Kolbenstange 2 abgewandte Stirnfläche des Trennkolbens 7 auf und bewirkt eine axiale Verschiebung des Trennkolbens 7 innerhalb des Raumes 6 in Richtung auf die Kolbenstange 2.

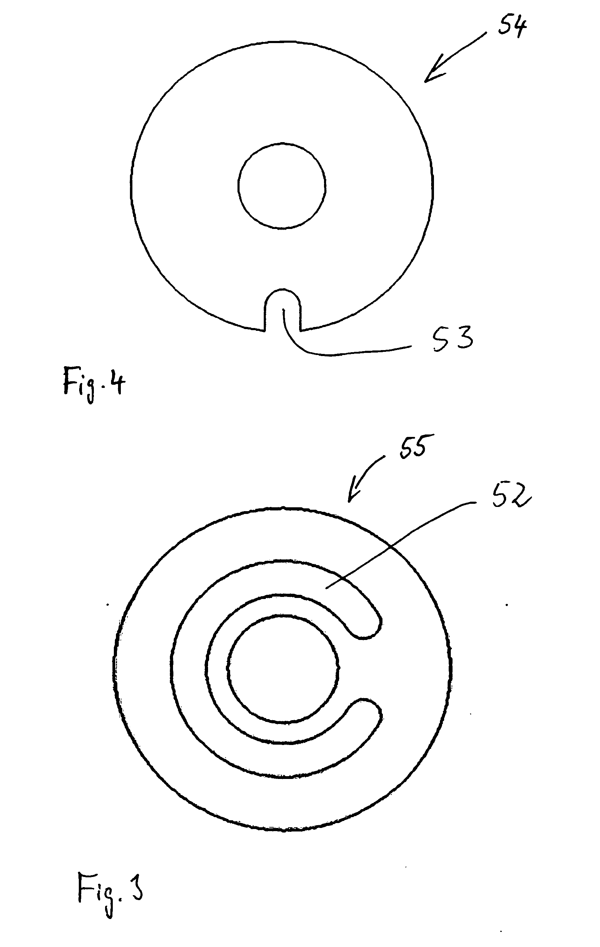

In der Ventilscheibenanordnung, die das Druckbegrenzungsventil 12 bildet, ist eine in Fig. 3 vergrößert dargestellte so genannte Omegascheibe 55 angeordnet. Derartige Scheiben verdanken ihren Namen der omegaförmigen oder C-förmigen Ausnehmung 52, die innerhalb der Fläche dieser Scheibe vorgesehen ist. Diese Ausnehmung 52 stellt einen in Zugrichtung permanent geöffneten Durchflussquerschnitt für die Dämpfungsflüssigkeit zur Verfügung. Erst wenn der von der Dämpfungsflüssigkeit auf das Druckbegrenzungsventil 12 einwirkende Druck ausreichend groß ist, öffnet das Druckbegrenzungsventil 12. Parallel dazu existiert, auch wenn das Druckbegrenzungsventil 12 geschlossen ist, ein permanenter Bypassvolumenstrom durch den permanent geöffneten freien Durchflussquerschnitt der innerhalb des Zugstufenventils 13 angeordneten Bypassscheibe 54., sodass auch bei sehr geringen Amplituden der Schwingungsanregung, bei denen das Druckbegrenzungsventil 12 bzw. das Zugstufenventil 13 noch gar nicht seinen Öffnungsdruck erreicht hat, bereits ein eine axiale Verschiebung des Trennkolbens 7 bewirkender Bypassvolumenstrom vorhanden ist. Auf diese Weise wird eine besonders feinfühlige und bereits bei äußerst geringen Amplituden der Schwingungsanregung wirksam werdende amplitudenselektive Dämpfungseinrichtung erreicht.

Im linken Bildteil der Fig. 1 ist die Wirkungsweise der erfindungsgemäßen amplitudenselektiven Dämpfungseinrichtung in der Zugstufe dargestellt. Durch den als Zulaufbohrung ausgebildeten hydraulischen Verbindungskanal 10 fließt Dämpfungsflüssigkeit aus dem kolbenstangenseitigen Arbeitsraum 3 in die Kammer 8 des Raumes 6 und beaufschlagt die der Kolbenstange 2 zugewandte Stirnfläche des Trennkolbens 7. Dadurch wird der Trennkolben 7 innerhalb des Raumes 6 in Richtung des Dämpfungskolbens 5 verschoben. Durch diese Verschiebung wird die in der Kammer 9 befindliche Dämpfungsflüssigkeit durch das Druckbegrenzungsventil 13 in den hydraulischen Verbindungskanal 11 gedrückt und fließt über diesen Verbindungskanal 11 in den kolbenstangenfernen Arbeitsraum 4. Auf diese Weise wird durch das Druckbegrenzungsventil 13 eine Dämpfungswirkung innerhalb des Bypass erreicht. Innerhalb der Ventilscheibenanordnung des Druckbegrenzungsventils 13 ist eine in Fig. 4 vergrößert dargestellte Bypassscheibe angeordnet, die an ihrem äußeren Umfang eine hinsichtlich ihrer Form frei wählbare Ausnehmung 53 aufweist. Diese Ausnehmung 53 stellt einen für die Dämpfungsflüssigkeit permanent geöffneten Durchflussquerschnitt im Sinne einer hydraulischen Drossel dar. Somit kann auch bei sehr geringen an dem Druckbegrenzungsventil 13 anliegenden Drücken, die bei Schwingungsanregungen mit sehr geringen Amplituden bzw. Drücken vorliegen, Dämpfungsflüssigkeit bei geschlossenem Druckbegrenzungsventil 13 durch den permanent geöffneten Drosselquerschnitt der Bypassscheibe fließen. Auf diese Weise wird eine feinfühlige und bereits bei sehr geringen Amplituden bzw. Drücken der Schwingungsanregung wirksam werdende amplitudenselektive Dämpfungseinrichtung erreicht.

In beiden voranstehend erläuterten Durchflussrichtungen ist jeweils sichergestellt, dass der gesamte Bypassvolumenstrom stets vollständig für die axiale Verschiebung des Trennkolbens 7 innerhalb des Raumes 6 zur Verfügung steht, wodurch bereits geringe Amplituden der Schwingungsanregung einen Bypassvolumenstrom erzeugen, durch den eine axiale Verschiebung des Trennkolbens 7 und damit eine amplitudenselektive Dämpfung erreicht wird.

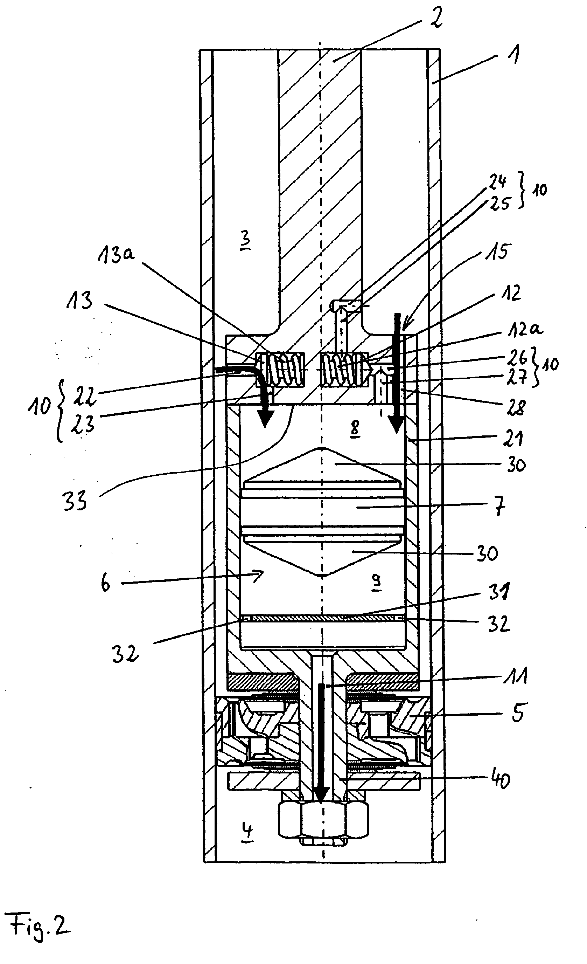

In Fig. 2 ist eine zweite Ausführungsform der erfindungsgemäßen amplitudenselektiven Dämpfungseinrichtung dargestellt. Gleichartige Bauteile sind mit denselben Bezugszeichen bezeichnet wie in Fig. 1. Der wichtigste Unterschied besteht im Vergleich zu dem Ausführungsbeispiel gemäß Fig. 1 darin, dass die Druckbegrenzungsventile 12, 13 nicht als Scheibenventile, sondern als federbelastete Sitzventile ausgebildet sind.

Der Trennkolben 7 ist innerhalb des Raumes 6 in axialer Richtung frei verschiebbar angeordnet und unterteilt den Raum 6 in die kolbenstangenseitige Kammer 8 und die kolbenstangenferne Kammer 9. An seinem Umfang liegt der Trennkolben 7 dichtend an der Gehäusewand 21 an, sodass die beiden Kammern 8, 9 gegeneinander abgedichtet sind (analog zur Ausführungsform gemäß Fig. 1).

In Fig. 2 ist durch die eingezeichneten Strömungspfeile dargestellt, wie die Dämpfungsflüssigkeit bei einer Zugstufendämpfung durch die amplitudenselektive Dämpfungseinrichtung strömt.

In Fig. 2 wird der Verbindungskanal 10, durch den der kolbenstangenseitige Arbeitsraum 3 mit der kolbenstangenseitigen Kammer 8 des Raumes 6 verbunden ist, durch in die Kolbenstange 2 eingebrachte Bohrungen 22, 23, 24, 25, 26, 27 gebildet. Die Bohrungen 22 und 23 verbinden den kolbenstangenseitigen Arbeitsraum 3 bzw. die kolbenstangenseitige Kammer 8 mit einem Hohlraum, in dem das als federbelastetes Sitzventil ausgebildete Druckbegrenzungsventil 13 angeordnet ist. Dieses Druckbegrenzungsventil 13 weist in der Ausführungsform gemäß Fig. 2 einen kegelförmigen Ventilkörper auf, der mit der Bohrung 22 als Ventilsitz zusammenwirkt. Bei einer Zugstufenbewegung der Kolbenstange 2 hebt sich der kegelförmige Ventilkörper des Druckbegrenzungsventils 13 gegen die Federkraft der Rückstellfeder 13a ab, wenn der durch diese Rückstellfeder 13a festgelegte Öffnungsdruck dieses Druckbegrenzungsventils 13 erreicht ist.

Das Druckbegrenzungsventil 12 weist ebenfalls eine Rückstellfeder 12a auf, die den Öffnungsdruck dieses Druckbegrenzungsventils bestimmt.

Das in Fig. 2 mit dem Bezugszeichen 12 bezeichnete Druckbegrenzungsventil ist in der Druckstufe des Schwingungsdämpfers wirksam und wirkt bei einer Zugstufenbewegung der Kolbenstange als Rückschlagventil. Die axial verlaufende Bohrung 28 bildet bei der Ausführungsform gemäß Fig. 2 eine hydraulische Drossel 15. Die Axialbohrung 28 stellt für die Dämpfungsflüssigkeit eine permanent geöffnete Durchflussöffnung mit hydraulischer Drosselwirkung zur Verfügung, sodass die Dämpfungsflüssigkeit unter Umgehung der Druckbegrenzungsventile 12, 13 direkt aus dem kolbenstangenseitigen Arbeitsraum 3 in die kolbenstangenseitige Kammer 8 bzw. umgekehrt fließen kann.

In der kolbenstangenfernen Kammer 9 des Raumes 6 ist eine Anschlagscheibe 31 mit über den Umfang verteilten Durchflussbohrungen 32 für die Dämpfungsflüssigkeit angeordnet. Die Anschlagscheibe 31 dient als Anschlag für den Trennkolben 7. Erreicht der Trennkolben 7 bei einer Zugstufenbewegung der Kolbenstange 2 seine axiale Endlage innerhalb des Raumes 6, so legt sich der Trennkolben 7 mit seinem kolbenstangenfernen Anschlag 30 an die Anlaufscheibe 31 an, sodass der Bypass abgeschaltet wird. Das gleiche Prinzip gilt für die Druckstufenbewegung der Kolbenstange analog. Immer dann, wenn der Trennkolben 7 innerhalb des Raumes 6 seine axiale Endlage erreicht und sich nicht mehr bewegt, ist der Bypass abgeschaltet, sodass der Dämpfungskolben 5 des Schwingungsdämpfers die Dämpfung der Schwingungen ausschließlich übernehmen muss.

Es versteht sich, dass die in Fig. 2 dargestellten Sitzventile auch konstruktiv anders ausgebildet sein können. So können beispielsweise die Rückstellfedern 12a, 13a innerhalb des Ventilschiebers angeordnet sein, anstatt den Ventilschieber, wie in Fig. 2 dargestellt, zu umschließen.

Über den Querschnitt der Bohrung 28 wird die Drosselwirkung der Drossel 15 eingestellt. Alternativ hierzu kann auch eine feste Blende innerhalb der Bohrung 28 vorgesehen werden, um den gewünschten Strömungswiderstand einzustellen.

In einer weiteren, nicht dargestellten Ausführungsform der Erfindung kann die Bohrung 28 ersetzt werden durch eine permanent geöffnete Öffnung in der mit dem Ventilkörper des Druckbegrenzungsventils 12 zusammenwirkenden Steuerkante, d.h. also mit dem Ventilsitz für den Ventilkörper des Druckbegrenzungsventils 12. Hierzu wird in der Steuerkante des Ventilsitzes ein permanent geöffneter Durchbruch vorgesehen, der durch den Ventilkörper des Druckbegrenzungsventils 12 nicht dichtend beaufschlagt werden kann. Auf diese Weise ist eine permanent geöffnete Strömungsverbindung zwischen dem kolbenstangenseitigen Arbeitsraum 3 und der kolbenstangenseitigen Kammer 8 und umgekehrt vorhanden, die eine hydraulische Drossel bildet, welche hydraulisch parallel zu den Druckbegrenzungsventilen wirksam ist. Dieselbe Ausbildung der Drossel kann auch an dem Druckbegrenzungsventil 13 vorgesehen sein.

In einer Druckstufenbewegung der Kolbenstange 2 kehrt sich die Funktion der Sitzventile 12, 13 um. In diesem Fall öffnet das Druckbegrenzungsventil 12 und der Ventilschieber des Druckbegrenzungsventils 13 wirkt als Rückschlagventil. Der durch die Bohrung 28 fließende Volumenstrom kehrt sich im Vergleich zu der in Fig. 2 dargestellten Pfeilrichtung um. In diesem Fall entfaltet das Druckbegrenzungsventil 12 eine Dämpfungswirkung, bis der Trennkolben 7 seine axiale Endposition erreicht hat und sich an die plane Stirnfläche der Kolbenstange 2 mit seinem kolbenstangenseitigen Anschlag 30 anlegt. Hat der Trennkolben 7 seine axiale Endposition erreicht, so liegt er an der planen Stirnfläche der Kolbenstange 2 an und der Bypass ist abgeschaltet. Die Dämpfwirkung des Schwingungsdämpfers wird dann vom Dämpfungskolben 5 ausschließlich übernommen.

### Bezugszeichenliste

- 1.: Dämpferrohr
- 2.: Kolbenstange
- 2a: radialer Absatz
- 3.: Arbeitsraum
- 4.: Arbeitsraum
- 5.: Dämpfungskolben
- 6.: Raum
- 7.: Trennkolben
- 8.: Kammer
- 9.: Kammer
- 10.: Verbindungskanal
- 11.: Verbindungskanal
- 12.: Druckbegrenzungsventil
- 12a: Rückstellfeder
- 13.: Druckbegrenzungsventil
- 13a: Rückstellfeder
- 15.: Drossel
- 20.: Gewinde
- 21.: Gehäusewand
- 22.: Bohrung
- 23.: Bohrung
- 24.: Bohrung
- 25.: Bohrung
- 26.: Bohrung
- 27.: Bohrung
- 28.: Bohrung
- 30.: Anschlagpuffer
- 31.: Anlaufscheibe
- 32.: Durchflussbohrung

- 33.: Stirnfläche
- 40.: Zapfen
- 50.: Ventilträger
- 52.: Ausnehmung
- 53.: Ausnehmung
- 54.: Bypassscheibe
- 55.: Omegascheibe

## Patentansprüche

1. Schwingungsdämpfer mit einer amplitudenselektiven Dämpfungseinrichtung, umfassend
a) ein mit Dämpfungsflüssigkeit gefülltes Dämpferrohr (1), in dem eine Kolbenstange (2) hin und her bewegbar angeordnet ist, die einen den Innenraum des Dämpferrohrs (1) in einen kolbenstangenseitigen (3) und einen kolbenstangenfernen Arbeitsraum (4) aufteilenden Dämpfungskolben (5) trägt,
b) einen innerhalb eines zwischen den Arbeitsräumen (3, 4) vorgesehenen Bypass angeordneten Raum (6) zur Aufnahme von Dämpfungsflüssigkeit, der hydraulisch parallel zu dem Dämpfungskolben (5) angeordnet ist und in dem ein in axialer Richtung bewegbarer Trennkolben (7) angeordnet ist, der den Raum (6) in eine kolbenstangenseitige (8) und eine kolbenstangenferne Kammer (9) unterteilt,
c) wobei der Bypass mindestens einen ersten hydraulischen Verbindungskanal (10), über den der kolbenstangenseitige Arbeitsraum (3) mit der kolbenstangenseitigen Kammer (8) und mindestens einen zweiten hydraulischen Verbindungskanal (11), über den der kolbenstangenferne Arbeitsraum (4) mit der kolbenstangenfernen Kammer (9) verbunden ist, umfasst, und wobei innerhalb des Bypass mindestens zwei Ventile (12, 13) angeordnet sind, von denen eines in der Zugstufe und eines in der Druckstufe wirksam ist,
**dadurch gekennzeichnet,**
d) **dass** der Trennkolben (7) innerhalb des Raumes (6) axial frei beweglich und die Kammern (8, 9) gegeneinander abdichtend angeordnet ist,
e) **dass** das erste Ventil (12) in der Druckstufe als Durchlassventil ohne Druckbegrenzungswirkung oder als Druckbegrenzungsventil und in der Zugstufe als Rückschlagventil wirkt,
f) **dass** das zweite Ventil (13) in der Zugstufe als Druckbegrenzungsventil und in der Druckstufe als Rückschlagventil wirkt,
g) und **dass** der den Trennkolben aufnehmende Raum (6) derart mit den Verbindungskanälen (10, 11) verbunden ist, dass der gesamte Bypassvolumenstrom in der Zugstufe und in der Druckstufe jeweils vollständig für die axiale Verschiebung des Trennkolbens (7) innerhalb des Raumes (6) eingesetzt wird.

2. Schwingungsdämpfer nach Anspruch 1, wobei zusätzlich zu dem ersten (12) und zweiten Ventil (13) innerhalb des Bypass eine hydraulische Drossel (15) vorgesehen ist, die hydraulisch parallel zu den Ventilen (12, 13) angeordnet ist.

3. Schwingungsdämpfer nach Anspruch 1 oder 2, wobei das erste Ventil (12) als Druckbegrenzungsventil ausgebildet ist und einen wesentlich geringeren Öffnungsdruck aufweist als das zweite Druckbegrenzungsventil (13).

4. Schwingungsdämpfer nach den voranstehenden Ansprüchen, wobei das mindestens erste (12) und das mindestens zweite Druckbegrenzungsventil (13) als federbelastete Sitzventile ausgebildet sind.

5. Schwingungsdämpfer nach den Ansprüchen 1 bis 3, wobei das mindestens erste (12) und das mindestens zweite Druckbegrenzungsventil (13) als federbelastete Scheibenventile ausgebildet sind.

6. Schwingungsdämpfer nach Anspruch 5, wobei die Ventile (12, 13) eine eine oder mehrere Ausnehmungen (53) aufweisende Bypassscheibe (54) umfassen, die mit ihrer Ausnehmung (53) oder ihren Ausnehmungen (53) eine definierte Drosselöffnungen zur Bildung einer für die Dämpfungsflüssigkeit permanent geöffneten hydraulischen Drossel (15) aufweisen.

7. Schwingungsdämpfer nach den voranstehenden Ansprüchen, wobei der Trennkolben (7) an seinen axialen Stirnflächen elastische Anschlagpuffer (30) aufweist.

8. Schwingungsdämpfer nach den voranstehenden Ansprüchen, wobei innerhalb des den Trennkolben (7) aufnehmenden Raumes (6) Anschlagscheiben (31) angeordnet sind, welche Anschlagflächen für den Trennkolben (7) aufweisen.

## Claims

1. Vibration damper having an amplitude-selective damping device, including
a) a damping tube (1) which is filled with damping fluid and in which a piston rod (2) is disposed so as to be able to move in a reciprocating manner, which piston rod supports a damping piston (5) which divides the interior of the damping tube (1) into a piston rod-side working zone (3) and a working zone (4) remote from the piston rod,
b) a zone (6) disposed within a bypass provided between the working zones (3, 4) for receiving damping fluid, which zone is disposed so as to be hydraulically in parallel with the damping piston (5) and in which zone an axially movable separating piston (7) is disposed which divides the zone (6) into a piston rod-side chamber (8) and a chamber (9) remote from the piston rod,
c) wherein the bypass includes at least a first hydraulic connecting channel (10), via which the piston rod-side working zone (3) is connected to the piston rod-side chamber (8), and at least a second hydraulic connecting channel (11), via which the working zone (4) remote from the piston rod is connected to the chamber (9) remote from the piston rod, and wherein at least two valves (12, 13) are disposed within the bypass, of which one is effective in the traction stage and one is effective in the compression stage,
**characterised in that**
d) the separating piston (7) is disposed so as to be axially freely movable within the zone (6) and so as to seal the chambers (8, 9) with respect to each other,
e) the first valve (12) acts in the compression stage as an admission valve without a pressure limiting action or as a pressure limiting valve and acts in the traction stage as a non-return valve,
f) the second valve (13) acts in the traction stage as a pressure limiting valve and acts in the compression stage as a non-return valve,
g) and the zone (6) receiving the separating piston is connected to the connecting channels (10, 11) such that the entire bypass volume flow in the traction stage and in the compression stage is used in each case completely for the axial displacement of the separating piston (7) within the zone (6).

2. Vibration damper as claimed in Claim 1, wherein in addition to the first (12) and second (13) valves within the bypass a hydraulic restrictor (15) is provided and is disposed so as to be hydraulically in parallel with the valves (12, 13).

3. Vibration damper as claimed in Claim 1 or 2, wherein the first valve (12) is formed as a pressure limiting valve and comprises a substantially smaller opening pressure than the second pressure limiting valve (13).

4. Vibration damper as claimed in the preceding Claims, wherein the at least first (12) and the at least second (13) pressure limiting valves are formed as spring-loaded seating valves.

5. Vibration damper as claimed in Claims 1 to 3, wherein the at least first (12) and the at least second (13) pressure limiting valves are formed as spring-loaded disc valves.

6. Vibration damper as claimed in Claim 5, wherein the valves (12, 13) include a bypass disc (54) comprising one or several recesses (53), which bypass discs comprise with their recess(es) (53) a defined restrictor opening for forming a hydraulic restrictor (15) which is permanently open for the damping fluid.

7. Vibration damper as claimed in the preceding Claims, wherein the separating piston (7) comprises resilient buffer stops (30) on its axial end surfaces.

8. Vibration damper as claimed in the preceding Claims, wherein within the zone (6) receiving the separating piston (7) there are disposed stop washers (31) which comprise stop surfaces for the separating piston (7).

## Revendications

1. Amortisseur de vibrations avec un système d'amortissement à force d'amortissement dépendant de l'amplitude, qui comprend :
a) un tube d'amortisseur (1), rempli de fluide d'amortissement, dans lequel est agencée une tige de piston (2), qui, mobile en va-et-vient, porte un piston d'amortissement (5), qui divise l'espace intérieur du tube d'amortisseur (1) en une chambre de travail (3) côté tige de piston (3) et en une chambre de travail (4) éloignée de la tige de piston,
b) un espace (6), qui, disposé dans un by-pass, prévu entre les chambres de travail (3, 4), et agencé, hydrauliquement, en parallèle par rapport au piston d'amortissement (5), est destiné à recevoir un fluide d'amortissement, et dans lequel est agencé un piston séparateur (7), mobile dans la direction axiale, qui divise l'espace (6) en une chambre (8) côté tige de piston et en une chambre (9) éloignée de la tige de piston,
c) sachant que le by-pass comprend au moins un premier canal de liaison hydraulique (10), par l'intermédiaire duquel la chambre de travail (3) côté tige de piston est reliée à la chambre (8) côté tige de piston, et au moins un deuxième canal de liaison hydraulique (11), par l'intermédiaire duquel la chambre de travail (4) éloignée de la tige de piston est reliée à la chambre (9) éloignée de la tige de piston, et sachant que sont installées, à l'intérieur du by-pass, au moins deux clapets (12, 13), dont l'un agit lors d'une course de traction et l'autre lors d'une course de pression,
**caractérisé en ce que**
d) le piston séparateur (7) est agencé à l'intérieur de l'espace (6), qu'il peut se mouvoir librement dans la direction axiale et qu'il assure l'étanchéité des chambres (8, 9) l'une par rapport à l'autre,
e) le premier clapet (12) agit lors d'une ourse de pression, en tant que clapet de passage sans effet limiteur de pression ou en tant que clapet de limitation de pression et agit lors d'une ourse de traction en tant que clapet de non-retour,
f) le deuxième clapet (13) agit lors d'une ourse de traction en tant que clapet de limitation de pression et lors d'une course de pression en tant que clapet de non-retour,
g) et que l'espace (6), qui reçoit le piston séparateur, est relié aux canaux de liaison (10, 11) de sorte que la totalité du flux volumétrique du by-pass, lors d'une course de traction et lors d'une course de pression, soit chaque fois entièrement mis en oeuvre pour le déplacement axial du piston séparateur (7) à l'intérieur de l'espace (6).

2. Amortisseur de vibrations selon la revendication 1, dans lequel un étranglement hydraulique (15), agencée hydrauliquement en parallèle par rapport aux clapets (12, 13), est disposé à l'intérieur du by-pass, en plus du premier clapet (12) et du deuxième clapet (13).

3. Amortisseur de vibrations selon revendication 1 ou 2, dans lequel le premier clapet (12) est réalisé en tant que clapet de limitation de pression et présente une pression d'ouverture considérablement plus faible que le deuxième clapet de limitation de pression (13).

4. Amortisseur de vibrations selon l'une des revendications précédentes, dans lequel le premier clapet de limitation de pression (12), au moins prévu, et la deuxième clapet de limitation de pression (13), au moins prévu, sont réalisés en tant que soupapes à siège commandées par ressort

5. Amortisseur de vibrations selon l'une des revendications 1 à 3, dans lequel le premier clapet de limitation de pression (12), au moins prévu, et le deuxième clapet de limitation de pression (13), au moins prévu, sont réalisés en tant que soupapes en disque commandées par ressort

6. Amortisseur de vibrations selon la revendication 5, dans lequel les clapets (12, 13) comprennent une plaque by-pass (54), qui, pourvue d'un ou de plusieurs évidements (53), présente des ouvertures d'étranglement, définies par leur évidement (53) ou leurs évidements (53), pour la formation d'un étranglement hydraulique (15) ouvert en permanence pour le fluide d'amortissement.

7. Amortisseur de vibrations selon l'une des revendications précédentes, dans lequel le piston séparateur (7) présente des tampons de butée (30) élastiques sur ses surfaces frontales, axiales.

8. Amortisseur de vibrations selon l'une des revendications précédentes, dans lequel des disques de butées (31), qui présentent des surfaces de butée pour le piston séparateur (7), sont agencés à l'intérieur de la chambre (8) côté tige de piston, qui reçoit le piston séparateur (7).
